# EUROPEAN PATENT SPECIFICATION

(11) **EP 4 274 995 B1**
(45) Date of publication and mention of the grant of the patent: **15.07.2026**
(21) Application number: 22700590.7
(22) Date of filing: 10.01.2022
(51) Int. Cl.: F23G 5/24

(54) **CARBONIZATION AND PYROLYZATION METHOD AND SYSTEM**
PROWASTE CARBONISIERUNG UND PYROLYSE
CARBONISATION ET PYROLYSE PROWASTE

(30) Priority: 11.01.2021 EP 21150890
(43) Date of publication of application: 15.11.2023
(73) Proprietor: Dops B.V., 1812 RC Alkmaar (NL)
(72) Inventor: PRONKER, Wiebe Feije, 2371 DG Roelofarendsveen (NL)
(74) Representative: EP&C
(86) International application number: PCT/EP2022/050347
(87) International publication number: WO 2022/148865

(56) References cited:
- WO-A1-2018/007964
- CN-A- 103 060 011
- CN-A- 107 477 585

## Description

### Field of the invention

The invention relates to conversion of hydrocarbon containing materials or products, particularly waste, into their constituting elements or small molecules by combined high temperature carbonization and pyrolyzation. Hereinafter the conversion method and system are also referred to as ProWASTE.

### Terms

### Carbonization:

The anoxic heating of coal, wood, biomass, paper, plastics and other hydrocarbons or hydrocarbons containing, most solid, materials or masses such that all volatile elements are freed, either evaporated or broken down to molecules that evaporate and such that a carbon - ash mass remains.

### Pyrolyzation:

The anoxic heating of hydrocarbons to temperatures that break down longer molecules into volatile components and/or volatile components into short chain molecules or the constituting elements.

### Prior art discussion

Many pyrolyzation and carbonization processes exist already or are described in the public domain. To describe what ProWASTE discriminates, these prior art processes are described on the basis of common properties which group those prior art processes or methods in different aspects in which they differ from the ProWASTE process.
- There are prior art pyrolyzation processes that are based on batch wise processing of a certain amount of material from its starting composition to a final or semifinal end state and without new material entering into the process during processing.
   The ProWASTE process is characterized by a continuous or semi-continuous plug stream with new material being fed into the process continuously or intermittently on one side of a reaction channel or shaft and with a residue leaving the process continuously or intermittently at the other side of the channel or shaft.
- There are prior art pyrolyzation processes where air or oxygen is admitted to or injected directly into the process in direct contact with the pyrolyzing and carbonizing mass in order to partial incinerate the pyrolyzing and carbonizing mass in order to provide the necessary heat. This leads to partial incineration of specifically the carbon fraction of the carbonizing mass.
   The ProWASTE process is characterized by that the necessary heat for heating up is added to the pyrolyzing - carbonizing process indirectly, by conduction and radiation, from the material that shapes the containing shafts or channels in which the process takes place. Furthermore, that oxygen or air is added to the pyrolyze gas downstream of the carbonizing process in a way that no oxygen can reach the solid fraction of the carbonizing mass.
- There are prior art pyrolyzation processes where heat is added indirectly through the wall of the vessel containing the process mass where this channel or vessel, or at least the heat exchanging part of the vessel, is made out of metal. These processes are characterized by relatively low (below 500 °C), intermediate (up to 700 °C) or medium high (up to 900 °C) pyrolyzation temperatures, leaving many shorter or persistent hydrocarbon chains intact.
   ProWASTE is characterized by the use of a refractory material to form the pyrolyzation / carbonization shaft(s) or channel(s), creating the possibility to rise the temperature of the carbonizing mass to temperatures above 900 °C, more specifically to temperatures around 1150 °C. ProWASTE is further characterized by that the temperature of the pyrolyze gas is increased to even higher temperatures of e.g. 1500 °C or higher through partial combustion by adding oxygen or an oxygen containing gas to the pyrolyze gas before the gas leaves the refractory structure and thus the process.
- There are prior art pyrolyzation processes where heat is added to the pyrolyzing and carbonizing mass by an additional medium which is mixed with the pyrolyzing and carbonizing mass. This medium can be fine grained like sand or coarse, consisting of pebbles or ceramic or metal balls. This additional medium is heated outside direct contact with the pyrolyzing and carbonizing mass in a separate compartment or furnace and either recycled or processed once through.
   The ProWASTE process again is characterized by that the necessary heat for heating up is added to the process indirectly, by conduction and radiation, from the material that shapes the containing shafts or channels in which the process takes place.
- There are prior art pyrolyzation processes that use auger reactors where a screw or other transporting mechanism drives the pyrolyzing and carbonizing mass through a pipe or channel, heated from the outside or by mixing with an additional medium as described above.
   ProWASTE is characterized by a plug stream type reactor where the pyrolyzing and carbonizing mass is pushed through from one end, whether or not assisted by gravitational forces but without a transporting mechanism within the reactor itself. It is also characterized by the fact that the volume of the carbonizing mass can reduce during the carbonization process but that the volume loss is filled continuously by adding new material to the process such that the channel or shaft remains completely filled up. This can result in a higher plug stream velocity at the entry side of the carbonization channel and a lower plug stream velocity in the downstream section of the channel.
- There are prior art pyrolyzation processes that use (different forms of) fluidized bed reactors, like bubbling bed reactors, mixing bed reactors or entrained flow reactors. These types of reactors create fast mixing conditions and fast heat and gas exchange. They make use of high flow velocities for the gas fraction in the reactor and have short residence times and/or high re-circulation folds. They have, however, serious limitations with respect to size and weight ranges and size and weight distribution of the solid mass particles. Fluidized bed reactors have difficulties to treat larger and heavier parts, specifically in a mixture with lighter parts and when heavier parts do not disintegrate during the process.
   ProWASTE is characterized by a plug stream type reactor where a mixed solid mass is led through the reactor where heat exchange is slow, created by radiation and conduction. ProWASTE is further characterized by low gas stream velocities and is very tolerant for uneven distributions of size and/or weight of the solid parts in the feed mass.
- Then there are prior art processes that pyrolyze more fluid or (semi) liquid materials or mixtures, often containing larger amounts of water. These types of pyrolyze reactors are often pipe reactors, and often under high pressure.
   ProWASTE is characterized by a dry or semi dry solid material stream in one or more shafts or channels under close to atmospheric pressure.
- WO2018/007964 A1 discloses an apparatus for processing reusable fuel, comprising a continuous material supply assembly and a heated airlock feeder designed to continuously receive and process the material. The processed material is then transferred to a reactor, which is equipped with a vapor refining system for processing vapor produced during the reaction.
- CN103060011 A furthermore discloses a preparation method and device for thermally cracking biomass into gas. The method comprises the steps of air being expelled from the biomass through compression. The biomass is then dried and subjected to a volatile matter reaction. The resulting volatile biomass compound undergoes a thermal cracking reaction to convert the energy elements in the biomass into gas.
- Most prior art processes have in common that the highest temperature the pyrolyze gas reaches is close to or equal to the highest temperature reached within the solid fraction in the process.
   ProWASTE is characterized by a significant temperature increase for the pyrolyze gas fraction after leaving the carbonization channel. Both the final and/or highest temperature of the solid carbonized mass and the temperature profile of the pyrolyze gas are controlled within largely independent, pre-chosen narrow temperature bands.

Another group of processes of prior art are those used for coke making. In fact, coke making as implemented for the iron and steel industry can be considered as pyrolyzing and carbonizing coking coal, releasing all volatiles from the coal input. They resemble the ProWASTE process as they use a refractory construction to heat up the coal mass and they reach a high final process end temperature for the solid mass (the coke) of circa 1150 °C. Two forms of coke making are widely used:
- By-product coke making where the coal is batch wise pyrolyzed in narrow rectangular chambers, not channels, and where the pyrolyze gas (coke gas) leaves the carbonizing mass relatively cold (depending on the stage of the process) and is quenched immediately after leaving the coking chamber.
- Heat recovery coke making where coal is batch wise pyrolyzed in mostly very large chambers, also not channels, and where air is admitted partly in the coking chambers, partly in combustion channels around the coking chambers and partly thereafter such that all pyrolyze gas (coke gas) is burned. The resulting excessive heat is subsequently led to steam boilers to produce high temperature steam.

Both those processes differ from the ProWASTE process, separate from their application, in that those processes are batch wise, the pyrolyzing /carbonizing coal mass remains stationary during the process in chambers instead of moving through channels or shafts. The by-product coke making differs too in that the coke gas is quenched immediately after leaving the coking chamber. The heat recovery coke making differs too in that all coke gas is fully incinerated before leaving the process.
- In coke making, also shaft reactor coking configurations are proposed but never came to (wide spread or lasting) application. When all patents in this field are reviewed, processes differ from ProWASTE in that the processes are executed batch wise and not (semi-) continuously in a plug stream, or in that the produced off gas is led directly out of the reactor or incinerated completely within the reactor, or in that shafts are operated alternatingly in combined operation instead of independently, or in that "shafts" are, with respect to their cross section, more like flat vertical chambers, or in a combination of those aspects.
   ProWASTE instead, apart from a different field of application, is characterized by channels, shafts or tunnels, in which the material is processed continuously, with continuous feeding and continuous offloading, and where a single channel can be operated self-contained, independently of the presence of more or adjacent channels. Furthermore, ProWASTE is characterized that the pyrolyze gas is combusted only partially within the process, but leaving between 50% and 75% of the heating value of the gas untouched.

### Summary of the invention

This invention provides a process and describes a possible embodiment for treating biomass, hydrocarbons containing residual materials from other processes, hydrocarbons containing end-of-live components, articles or products and/or all sorts of (semi-) dry waste streams, including paper and plastics, thermo-plastic and thermo-hardening, and any mixtures of the mentioned materials, including any contaminants like metals or metal parts, glass, sand, stone, gypsum etc., whenever present. The description below gives a proposed embodiment for the process.

### Brief description of the drawing

Embodiments of the invention are illustrated in the attached drawing, wherein:
Fig. 1 shows an embodiment of a cross section through carbonization channel and refractory structure;
Fig. 2 shows an embodiment of a cross section through multiple carbonization channels within one build-up refractory structure;
Fig. 3 represents a cross section through possible embodiment of ProWASTE reactor; and
Fig. 4 is an embodiment of a cross section top of reactor showing the way a non-sticking layer can be inserted between the waste and the refractory structure.

### Description

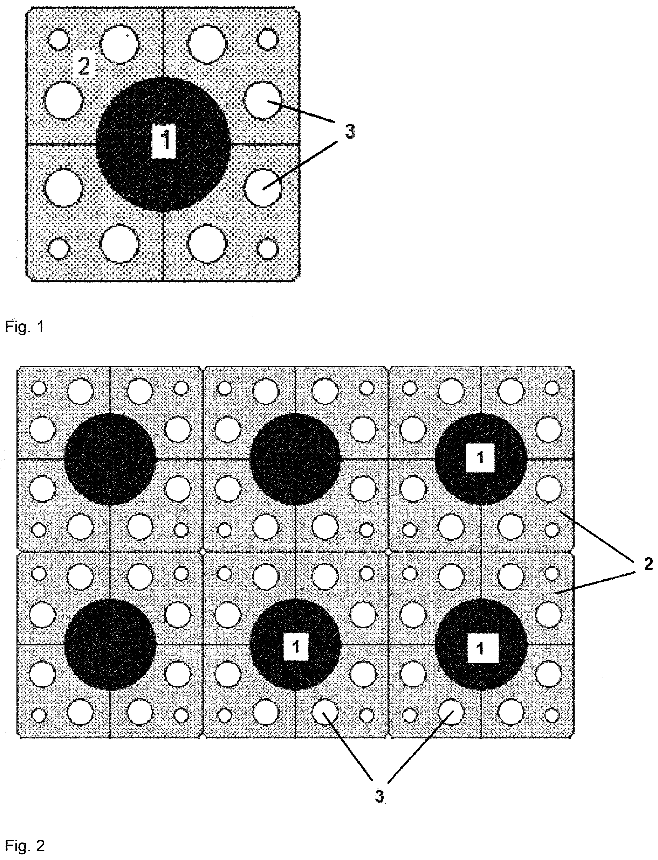

Figure 1 presents a possible cross section through one carbonization channel, perpendicular to its length axis. In this figure:
[1] Pyrolyzing and carbonizing mass within a circular carbonization channel or shaft.
[2] Refractory structure forming the channel. In this embodiment, the refractory is split in four segments in cross section. The segments are to prevent high stresses and fracturing during heating up or cooling down.
[3] Combustion channel around the carbonization channel. In this embodiment, eight combustion channels are grouped around a single carbonization channel.

The pyrolyze gas released during the carbonization process is led directly to the combustion channels. Within the combustion channels, this pyrolyze gas is partially combusted, generating enough heat to heat up the carbonizing mass and to make up for heat losses to the outside world.

Figure 2 presents a possible cross section through multiple parallel channels. Multiple channels are better with respect to the conduction of the heat towards the centerline of the channels. In very large diameter channels, this would take too much time, slowing down the reaction processes and leading to the need to lower the plug stream velocity and to little gain in the amount of matter that can be processed per unit of time.

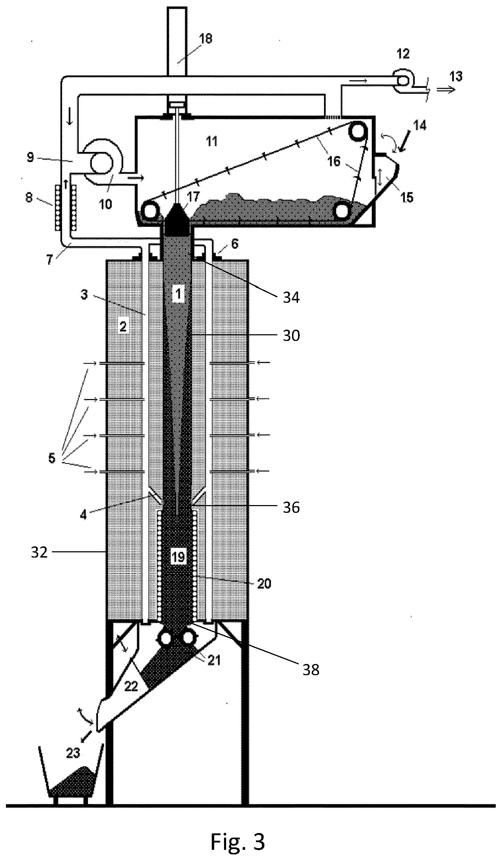

Figure 3 presents a cross section along the length axis of the carbonization channel of a possible embodiment for a single vertical shaft ProWASTE reactor. In this figure:
[1], [2] and [3] are again the carbonization channel, the refractory structure and a combustion channel.
[4] Is the direct connection between the carbonization shaft and the combustion channels. The pyrolyze gas develops within the carbonization channel and trickles through the porous carbonizing and partially already carbonized mass downstream (the upstream side is closed off and has equal or higher pressure) towards these connection channels and subsequently towards the combustion channels [3]
[5] Oxygen injection points in the combustion channels at different levels in the refractory structure. The (sub-stochiometric) amount of oxygen determines how much of the pyrolyze gas is combusted and therewith how much heat is added to the process. This shall be an amount such that all pyrolyze gas reaches a temperature of e.g. 1500 °C or more and such that the carbonizing mass in the carbonization channels reaches a temperature of 900 °C or more. The amount of heat necessary is determined by the heat capacity of the input mass and by the amount of energy necessary for decomposition of the solid materials and for the evaporation of the volatile components. It is also determined by the heat losses to the outside world and thus by the amount of insulation around the refractory structure. With the heights at which oxygen is injected into the combustion channels, the vertical heat profile through the refractory structure can be controlled, giving more control over the carbonization / pyrolyzation process. Instead of oxygen, air could be used to (partial) combust the pyrolyze gas. This will lead, however, to dilution of the pyrolyze gas with nitrogen. This could limit the use-options for the gas.
[6] Connection between combustion channel in the refractory structure and ducting pipe work.
[7] Ducting pipe work to lead the partially combusted pyrolyze gas to the next step in the process. This can be a pre-heater / dryer for the input material, a scrubber or other gas treatment facility, a baghouse, a chemical conversion unit or any type of burner or a flare.
[8] A cooling section within the pyrolyze gas ducting. This cooling section can be placed as close as possible to [6], the connection between the combustion channel in the refractory structure and the ducting pipework, or further downstream in the ducting pipework.
[9] The still hot pyrolyze gas can be mixed with a recirculation flow of same gas which is already used to dry and pre-heat the input material. This would lower the gas temperature before it enters the pre-heating and drying section but multiplies the volume for drying and pre-heating. Too high pre-heating temperatures can be avoided this way, still using all heat present within the pyrolyze gas.
[10] Ventilator to drive the recirculating gas flow. This ventilator too maintains a pressure difference between the input side of the carbonization channel (higher pressure) and the combustion channels (lower pressure). This prevents pyrolyze gas leaving the process without passing through the high temperature combustion channels.
[11] Pre-heat and dry box. Within this box, the heat content of the pyrolyze gas (and recirculation gas) can transfer to the solid input material to pre-heat and dry the input material before it enters the carbonization channel. This box can have different shapes and dimensions and can be equipped with mechanisms to better mix the pre-heating and drying material and the gas flow (like e.g. mixers or rotating drums). Basically, a counter movement is created between the solid material on the one hand and the gas flow on the other hand.
[12] Exhaust ventilator, providing pressure for following gas treatment steps where necessary and maintaining a slight under-pressure (below atmospheric) for the full gas system of the ProWASTE reactor, preventing any gas leakages from the reactor to the outside world.
[13] Output of the pyrolyze gas from the ProWASTE reactor and connection to a subsequent process step for the released gas. This next step can be a scrubber or any other gas cleaning facility (like an electrostatic precipitator or baghouse), it can be a de-sulphering unit, a chemical conversion unit, a gas separation unit or any type of burner or a flare.
[14] Input of the material to be processed in the reactor. With the pre-heat and dry box [11] wet components (up to about 25% weight of water) can be dealt with without slowing down the process in the carbonization shaft.
[15] Lock-box or gate to prevent gas escaping from the process or air entering into the process. The two sluice gates (in the example a slide valve and a hinged valve) open only one at a time.
[16] Within the pre-heat and dry box, some sort of transporting mechanism moves the input material towards the entry point of the carbonization shaft. In this example, a double-chain conveyor is depicted.
[17] Entry of the carbonization channel, closed off by a piston or plunger which lifts intermittently to let new material into the channel. Subsequently, the piston or plunger pushes the material downwards into the channel, compacts the newly entered material and pushes the whole column of pyrolyzing and carbonizing mass downwards through the carbonization channel. Gas from the dry-box which enters the carbonization channel during the lifting of the piston comes out again through the combustion channels and back into the dry-box, driven by [10]
[18] Hydraulic or pneumatic cylinder or other lifting and pushing mechanism (e.g. electrical driven ball screw) for lifting the piston or plunger to let new material in into the carbonization channel and for pushing down the piston, for compacting the newly entered material at the entrance of the combustion channel and for pushing it through through the channel (in case of a vertical shaft assisted by gravity).
[19] The fully carbonized remnants of the input material at the end of the carbonization channel. In this embodiment, a cool down section is foreseen as an extension directly in line with the carbonization channel.
[20] Cooling jacket around the cool down section of the carbonization channel. Herewith, hot water and /or (high quality) steam can be generated.
[21] Stopper - breaker rolls. In this embodiment toothed drums or axles that hold up the carbonized and carbonizing mass within the cooling section and by this within the carbonization channel. The rolls also provide the resistance for the piston or plunger [17] to exert its compaction force.
[22] Lock room to prevent gas exiting from the process or air entering the process during discharge of the carbonized residue.
[23] Discharged carbonized residue. Due to the pyrolyzation / carbonization process, the volume of residue will be less than the original input material. Due to the high carbonization temperature (> 900 °C), the residue will be free of any hydrocarbons and many other polluting elements.

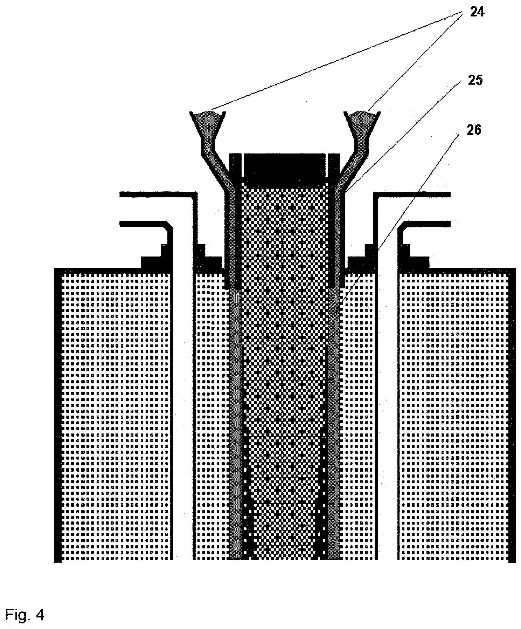

Figure 4 presents a detail of the cross section of the top of a possible embodiment along the length axis of the carbonization channel for a special configuration where an anti-clogging layer is added to the waste stream around its circumference. In this figure:
[24] Buffer or shute for the anti-clogging material that is inserted between the waste and the refractory structure. The material can be of any type, as long as it doesn't melt or reacts in a sticking way under the conditions in the carbonization channel. It is preferred to use a material with good heat conducting properties. An example material could be part of the (grinded) carbon fraction from the solid residue which would recirculate in the reactor but doesn't add complexity to the reactions and residual material.
[25] Guideway to bring the anti-clogging material to and enter it into the combustion channel. Aim is to distribute the material evenly around the circumference of the carbonization channel. A dozing mechanism and a sealing valve (e.g. a zellenrad gate) can be included into the feed of the anti-clogging material.
[26] The anti-clogging layer around the charge of the carbonization channel. The thickness of the layer can be controlled by the geometry of the entry and/or by a dosing mechanism in the feed. The thickness will increase when the charge of the combustion channel compacts due to the pyrolyzation / carbonization processes.
[30] The reaction zone for pyrolization / carbonization defined by the heat conducting walls/refractory structure [2].
[32] The housing of the reactor system having the refractory structure [2] defining the reaction zone [30], the plurality of combustion channels [3] and the various inlets and outlets for the feedstock, anti-clogging material, the gas and residue.
[34] The feedstock inlet where the raw material enters the reaction zone [30]
[36] The gas outlet at the gas discharging position where pyrolyze gas is removed from the reaction zone [30]
[38] The solid outlet at a solid discharge position downstream of the gas outlet [36] where the solid residue leaves the reaction zone [30].

### Application

The ProWASTE process can be used to process, among others, the following waste streams:
- So called Mixed Municipal Residual Waste;
- Any type of dry or semi dry biomass, without or with pollution with sand, stones, plastics or any other materials;
- De-watered sewage sludge;
- Mixed toxic waste from households or small companies;
- Mixed waste streams as left-overs from train or bus deconstructions;
- (Possibly contaminated) mixed hospital waste;
- Mixed paper and/or plastic waste streams that cannot be recycled properly in another way;
- Hydrocarbons containing mixed waste streams and residues from other processes;
- (Contaminated) heavy crude or tank cleaning residues;
- Soils, heavily polluted with oil, tars or other hydrocarbons;
- Tar sands;
- Car tires;
- End of live electrical and / or electronic compliances, computers, instruments and equipment;
- PCB's, cable booms, connectors;
- End of live solar panels;
- End of live windmill blades;
- GFRP or CFRP ship or yacht hulls or aircraft components;
- Aircraft interiors and any composite containing aircraft components;
- End of live artificial turf from sport fields;
- Car-recycling residual waste streams;
- Mixed textile products, clothing, rags and shoes;
- Carpets and matrasses;
- Or any mixture or combination of two or more waste streams as described above.

Basically, all solid or semi-solid waste streams with a certain percentage of no matter what type of hydrocarbons can be processed successfully in a ProWASTE reactor with proper dimensions. The percentage of hydrocarbons can be much lower than necessary for incineration within a waste incineration facility for the following reasons: The solid mass remains at a lower temperature compared to the temperature of the gas fraction which is burned, there is no nitrogen (in the combustion air) that needs to be heated up and because the dimensions of the refractory structure (and therewith the heat losses) are smaller than the furnace dimensions of an incineration facility with comparable throughput capacity.

### Start up

To start a ProWASTE reactor, the refractory structure needs to be heated up to a minimum pyrolyzing temperature to create sufficient pyrolyze gas from the initial load within the carbonization channel for further heating up and for maintaining the proper process conditions. The minimum temperature depends on the composition of the input material. Heating up can be accomplished by pre-heater burners in the combustion channels (e.g. by injecting a burning gas into the channels). Another way to start up a facility is by (possibly partial) incineration of a hydrocarbon rich starting load within the carbonization / pyrolyzation channel by temporary air or oxygen injection into the upstream side of the carbonization / pyrolyzation channel. Electrical preheating of the refractory structure is of course a third option.

### Advantages

The advantages of the ProWASTE process are many. To name them:
- It accepts a very wide range hydrocarbon containing dry or semi dry waste components.
- The presence of (mixed) metal parts, of stones, sand, chalk, gypsum, glass, etc. is not a problem for the process.
- A mixture of large chunks and fine particles can be well accepted in the process.
- Humidity or wet components are no problem (low level residual heat is used for drying).
- Low temperature volatiles in the input material do not present a problem for the process. They come down from the drier with the syngas (from which they can be scrubbed if necessary) or are cracked down and pyrolyzed within the process.
- The process runs at low pressure (close to atmospheric) with low gas stream velocities which simplifies any embodiment and limits risks of leakages.
- The process runs at low solid material stream velocities which limits wear and tear.
- Low noise levels from the embodiment due to low material and gas flow velocities and due to low pressure differences.
- The process is easily scalable and extendable, either in the size (length and diameter) of a single reaction channel or by placing more reaction channels in parallel, or both.
- The carbonized residue is clean from any volatiles, tars or any other hydrocarbons and forms an ideal feed material for urban mining: Metals will not oxidize during the process. Carbon, CaO, P and other ash components and metals can be separated in further process streams.
- Certain metals (e.g. Zn, Cd) evaporate during the process and come with the pyrolyze gas. They can be separated by controlled condensation during the cooling down of the pyrolyze gas.
- Fluorine, chlorine, bromine, iodine and sulphur come as elements or as hydrides in the syngas and are easily scrubbed in a wet gas scrubber.
- The resulting syngas is a high value feedstock for chemical industry. It will consist mainly of hydrogen (around 60%) and carbon monoxide (around 30%), depending on the feed material of the reactor.
- All already present tars, PACs, PFAS, dioxins and all other often toxic and persistent hydrocarbons will be broken down. No new will be formed.
- No formation of nitric oxides (NO_{X}).
- Very low levels of carbon dioxide (CO₂) are formed during the process. With biomass as feedstock and with the extraction and deposition of the carbon from the carbonized mass, the carbon footprint of the process is even negative.

### Disadvantages

Disadvantages are limited. A few are:
- It is a relative slow process due to the necessary heat transfer by radiation and conduction. It therefore requires a high process temperature and thus good insulation of any embodiment.
- Due to the necessary high temperature of the process and the heat capacity of the refractory structure, the process cannot be started and stopped quickly. The process is best operated on a continuous 24/7 basis.
- Valuable intermediate products like oils or tars ca not be separated from the pyrolyze gas.

## Claims

1. Method for the carbonization and/or pyrolyzation of a hydrocarbon comprising material, comprising
a first feeding step of continuously or intermittently feeding a feedstock of the hydrocarbon comprising material to a reaction zone (30) defined by heat conducting walls (2), at a supply position upstream of the reaction zone (30),
a heating step of indirect anoxic heating of the feedstock through the heat conducting walls (2), while displacing the feedstock downstream through the reaction zone (30), thereby carbonizing and/or pyrolyzing the feedstock to obtain a pyrolyze gas and a residue,
a first discharging step of discharging the obtained gas from the reaction zone (30) at a gas discharge position downstream of the reaction zone (30),
a second feeding step of feeding an oxygen comprising gas to the discharged gas,
a combustion step of at least partially combusting the discharged gas with the oxygen comprising gas, thereby indirectly heating the feedstock through the heat conducting walls (2), and
a second discharging step of discharging the residue from the reaction zone (30) at a solid discharge position downstream of the gas discharge position.

2. Method according to claim 1, wherein the hydrocarbon comprising material is indirectly heated to at least 900 °C, preferably to at least 1150 °C and/or wherein the at least partially combusted gas from the combustion step reaches a temperature of 1500 °C, preferably of 1800 °C.

3. Method according to any one of the preceding claims, wherein the feedstock is displaced from the supply position to the solid discharge position with a velocity in the range of 0.25-2.5 meter per hour, preferably in the range of 0.75-2 meter per hour, more preferably in the range of 1-1.5 meter per hour.

4. Method according to any one of the preceding claims, wherein the first feeding step further comprises feeding an anti-clogging material to the supply position of the reaction zone (30), such that the anti-clogging material is inserted between the feedstock and the heat conducting walls (2) of the reaction chamber (30), and wherein the residue is optionally used at least partially as anti-clogging material.

5. Method according to any one of the preceding claims, wherein the method further comprises pre-heating and optionally drying the feedstock with the leftover heat from the combustion step, and/or wherein the method further comprises, before the second discharging step, a cooling step of cooling down the residue.

6. Method according to any one of the preceding claims, wherein the combusted gas is subjected to a gas treatment, such as desulphurization, scrubbing, gas separation or incinerating, or a combination thereof.

7. Method according to any one of the preceding claims, wherein the gas pressure in the one or more combustion channels (3) is equal to or lower than the gas pressure in the reaction zone (30), and/or wherein the gas pressure in the reaction zone (30) is in the range of 0.7 - 2 bar, preferably below atmospheric pressure

8. Method according to any one of the preceding claims, wherein the gas pressure at the supply position upstream of the reaction zone (30) is equal to or higher than the gas pressure at the first discharging position.

9. Reactor system for the carbonization and/or pyrolyzation of a hydrocarbon comprising material, in particular for the method according to any one of the preceding claims, comprising
a housing (32) comprising
heat conducting walls (2) delimiting a reaction zone (30), wherein the reaction zone (30) is configured to allow displacement of the feedstock, and wherein the reaction zone is configured to allow carbonization and/or pyrolyzation of the feedstock to obtain a gas and a residue
an inlet (34) for supplying the feedstock to the reaction zone (30) at an upstream supply position,
a gas outlet (36) for discharging the obtained gas from the reaction zone (30), wherein the gas outlet (36) is positioned at a first discharging position downstream of the reaction zone (30),
a combustion channel (3) that is in heat conducting relationship with the heat conducting walls (2) of the reaction chamber, wherein the combustion channel comprises gas entry points (5) configured to receive an oxygen comprising gas,
a connection channel (4) connecting the gas outlet and the combustion channel (3), and
a solid outlet (38) for discharging the residue at a discharging position downstream of the gas outlet.

10. Reactor system according to claim 9, wherein at least the heat conducting walls (2) and the combustion channels (3), are made up from refractory materials.

11. Reactor system according to claim 9 or 10, wherein the reaction zone (30) is arranged vertically, and optionally comprises two or more reaction zones (30) parallel relative to each other.

12. Reactor system according to any one of the preceding claims 9-11, wherein the reaction zone (30) comprises more than one gas outlet (36) for discharging the obtained gas and more than one combustion channel (3) for combusting the obtained gas with the oxygen comprising gas.

13. The reactor system according to any one of the preceding claims 9-12, wherein the inlet (34) of the reaction zone (30) is closed off by a piston (17), wherein the piston (17) is configured to lift intermittently to let new hydrocarbon comprising material into the reaction zone (30) and to push the material downstream of the reaction zone (30).

14. Reactor system according to any one of the preceding claims 9-13, further comprising a cooling system (20), such as a cooling jacket (20), arranged at a downstream position of the gas outlet (36), wherein the cooling system (20) is configured for cooling down the residue, and/or comprising a pre-heat and dry box (11) arranged near the inlet (34) of the reaction zone (30), wherein the pre-heat and dry box (11) is configured for pre-heating and optionally drying the feedstock by contact with the combusted gas.

15. Reactor system according to any one of the preceding claims 9-14, further comprising a breaker mechanism (21), such as toothed drums or axles, arranged at the solid outlet (38).

## Patentansprüche

1. Verfahren zur Carbonisierung und/oder Pyrolysierung eines kohlenwasserstoffhaltigen Materials, umfassend
einen ersten Zuführschritt des kontinuierlichen oder intermittierenden Zuführens eines Ausgangsmaterials des kohlenwasserstoffhaltigen Materials zu einer Reaktionszone (30), die durch wärmeleitende Wände (2) definiert ist, an einer Zuführposition stromaufwärts der Reaktionszone (30),
einen Erhitzungsschritt des indirekten anoxischen Erhitzens des Ausgangsmaterials durch die wärmeleitenden Wände (2), während das Ausgangsmaterial stromabwärts durch die Reaktionszone (30) bewegt wird, wodurch das Ausgangsmaterial carbonisiert und/oder pyrolysiert wird, um ein Pyrolysegas und einen Rückstand zu erhalten,
einen ersten Ausstoßschritt des Ausstoßens des erhaltenen Gases aus der Reaktionszone (30) an einer Gasausstoßposition stromabwärts der Reaktionszone (30),
einen zweiten Zufuhrschritt des Zuführens eines sauerstoffhaltigen Gases zu dem ausgestoßenen Gas,
einen Verbrennungsschritt des wenigstens teilweise Verbrennens des ausgestoßenen Gases mit dem sauerstoffhaltigen Gas, wodurch das Ausgangsmaterial indirekt durch die wärmeleitenden Wände (2) erhitzt wird, und
einen zweiten Ausstoßschritt des Ausstoßens des Rückstands aus der Reaktionszone (30) an einer Feststoffausstoßposition stromabwärts der Gasausstoßposition.

2. Verfahren nach Anspruch 1, wobei das kohlenwasserstoffhaltige Material indirekt auf wenigstens 900 °C, vorzugsweise auf wenigstens 1150 °C, erhitzt wird und/oder wobei das wenigstens teilweise verbrannte Gas aus dem Verbrennungsschritt eine Temperatur von 1500 °C, vorzugsweise von 1800 °C, erreicht.

3. Verfahren nach einem der vorstehenden Ansprüche, wobei das Ausgangsmaterial mit einer Geschwindigkeit in dem Bereich von 0,25-2,5 Meter pro Stunde, vorzugsweise in dem Bereich von 0,75-2 Meter pro Stunde, bevorzugter in dem Bereich von 1-1,5 Meter pro Stunde, von der Zuführposition in die Feststoffausstoßposition bewegt wird.

4. Verfahren nach einem der vorstehenden Ansprüche, wobei der erste Zuführschritt ferner Zuführen eines Verstopfungsschutzmaterials zu der Zuführposition der Reaktionszone (30) umfasst, wobei das Verstopfungsschutzmaterial zwischen dem Ausgangsmaterial und den wärmeleitenden Wänden (2) der Reaktionskammer (30) eingeführt wird, und wobei der Rückstand gegebenenfalls wenigstens zum Teil als Verstopfungsschutzmaterial verwendet wird.

5. Verfahren nach einem der vorstehenden Ansprüche, wobei das Verfahren ferner Vorwärmen und gegebenenfalls Trocknen des Ausgangsmaterials mit der Restwärme aus dem Verbrennungsschritt umfasst und/oder wobei das Verfahren ferner vor dem zweiten Ausstoßschritt einen Abkühlschritt des Abkühlens des Rückstands umfasst.

6. Verfahren nach einem der vorstehenden Ansprüche, wobei das verbrannte Gas einer Gasbehandlung unterzogen wird, wie z.B. Entschwefelung, Waschen, Gastrennung oder Verbrennung oder einer Kombination davon.

7. Verfahren nach einem der vorstehenden Ansprüche, wobei der Gasdruck in dem einen oder den mehreren Verbrennungskanälen (3) gleich oder niedriger als der Gasdruck in der Reaktionszone (30) ist und/oder wobei der Gasdruck in der Reaktionszone (30) in dem Bereich von 0,7-2 bar, vorzugsweise unter Atmosphärendruck, liegt

8. Verfahren nach einem der vorstehenden Ansprüche, wobei der Gasdruck an der Zuführposition stromaufwärts der Reaktionszone (30) gleich dem oder höher als der Gasdruck an der ersten Ausstoßposition ist.

9. Reaktorsystem zur Carbonisierung und/oder Pyrolysierung eines kohlenwasserstoffhaltigen Materials, insbesondere für das Verfahren nach einem der vorstehenden Ansprüche, umfassend
ein Gehäuse (32) umfassend:
wärmeleitende Wände (2), die eine Reaktionszone (30) begrenzen, wobei die Reaktionszone (30) dafür gestaltet ist, Bewegung des Ausgangsmaterials zu ermöglichen, und wobei die Reaktionszone dafür gestaltet ist, Carbonisierung und/oder Pyrolysierung des Ausgangsmaterials zu ermöglichen, um ein Gas und einen Rückstand zu erhalten,
einen Einlass (34) zum Zuführen des Ausgangsmaterials zu der Reaktionszone (30) an einer stromaufwärtigen Zuführposition,
einen Gasauslass (36) zum Ausstoßen des erhaltenen Gases aus der Reaktionszone (30), wobei der Gasauslass (36) an einer ersten Ausstoßposition stromabwärts der Reaktionszone (30) angeordnet ist,
einen Verbrennungskanal (3), der in wärmeleitender Beziehung mit den wärmeleitenden Wänden (2) der Reaktionskammer steht, wobei der Verbrennungskanal Gaseintrittspunkte (5) umfasst, die dafür gestaltet sind, ein sauerstoffhaltiges Gas aufzunehmen,
einen Verbindungskanal (4), der den Gasauslass und den Verbrennungskanal (3) verbindet, und
ein Feststoffauslaß (38) zum Ausstoßen des Rückstands an einer Ausstoßposition stromabwärts des Gasauslasses.

10. Reaktorsystem nach Anspruch 9, wobei wenigstens die wärmeleitenden Wände (2) und die Verbrennungskanäle (3) aus feuerfesten Materialien bestehen.

11. Reaktorsystem nach Anspruch 9 oder 10, wobei die Reaktionszone (30) vertikal angeordnet ist und gegebenenfalls zwei oder mehr Reaktionszonen (30) parallel zueinander umfasst.

12. Reaktorsystem nach einem der vorstehenden Ansprüche 9-11, wobei die Reaktionszone (30) mehr als einen Gasauslass (36) zum Ausstoßen des erhaltenen Gases und mehr als einen Verbrennungskanal (3) zum Verbrennen des erhaltenen Gases mit dem sauerstoffhaltigen Gas umfasst.

13. Reaktorsystem nach einem der vorstehenden Ansprüche 9-12, wobei der Einlass (34) der Reaktionszone (30) durch einen Kolben (17) verschlossen ist, wobei der Kolben (17) dafür gestaltet ist, sich intermittierend anzuheben, um neues kohlenwasserstoffhaltiges Material in die Reaktionszone (30) einzulassen und das Material stromabwärts der Reaktionszone (30) zu drücken.

14. Reaktorsystem nach einem der vorstehenden Ansprüche 9-13, ferner umfassend ein Kühlsystem (20), wie z.B. einen Kühlmantel (20), das an einer Position stromabwärts des Gasauslasses (36) angeordnet ist, wobei das Kühlsystem (20) zum Abkühlen des Rückstands gestaltet ist, und/oder umfassend einen Vorwärm- und Trockenkasten (11), der nahe dem Einlass (34) der Reaktionszone (30) angeordnet ist, wobei der Vorwärm- und Trockenkasten (11) zum Vorwärmen und gegebenenfalls Trocknen des Ausgangsmaterials durch Kontakt mit dem verbrannten Gas gestaltet ist.

15. Reaktorsystem nach einem der vorstehenden Ansprüche 9-14, ferner umfassend einen an dem Feststoffauslass (38) angeordneten Brechermechanismus (21), wie z.B. gezahnte Trommeln oder Achsen.

## Revendications

1. Procédé de carbonisation et/ou de pyrolyse d'un matériau comprenant un hydrocarbure, comprenant
une première étape d'alimentation consistant à alimenter, de manière continue ou intermittente, une matière première du matériau comprenant un hydrocarbure dans une zone de réaction (30) définie par des parois conductrices de chaleur (2), au niveau d'une position d'alimentation en amont de la zone de réaction (30),
une étape de chauffage, de chauffage anoxique indirect de la matière première à travers les parois conductrices de chaleur (2), tout en déplaçant la matière première en aval à travers la zone de réaction (30), carbonisant et/ou pyrolysant ainsi la matière première pour obtenir un gaz de pyrolyse et un résidu,
une première étape d'évacuation consistant à évacuer le gaz obtenu de la zone de réaction (30) au niveau d'une position d'évacuation de gaz en aval de la zone de réaction (30),
une deuxième étape d'alimentation consistant à alimenter un gaz comprenant de l'oxygène au gaz évacué,
une étape de combustion consistant à brûler au moins partiellement le gaz évacué avec le gaz comprenant de l'oxygène, chauffant ainsi indirectement la matière première à travers les parois conductrices de chaleur (2), et
une deuxième étape d'évacuation consistant à évacuer le résidu de la zone de réaction (30) au niveau d'une position d'évacuation de solide en aval de la position d'évacuation de gaz.

2. Procédé selon la revendication 1, dans lequel le matériau comprenant un hydrocarbure est chauffé indirectement jusqu'à au moins 900 °C, de préférence jusqu'à au moins 1 150 °C et/ou dans lequel le gaz au moins partiellement brûlé provenant de l'étape de combustion atteint une température de 1 500 °C, de préférence de 1 800 °C.

3. Procédé selon l'une quelconque des revendications précédentes, dans lequel la matière première est déplacée de la position d'alimentation à la position d'évacuation de solide avec une vitesse dans la plage de 0,25 à 2,5 mètres par heure, de préférence dans la plage de 0,75 à 2 mètres par heure, de manière plus préférée dans la plage de 1 à 1,5 mètre par heure.

4. Procédé selon l'une quelconque des revendications précédentes, dans lequel la première étape d'alimentation comprend en outre l'alimentation d'un matériau anti-colmatage au niveau de la position d'alimentation de la zone de réaction (30), de sorte que le matériau anti-colmatage soit inséré entre la matière première et les parois conductrices de chaleur (2) de la chambre de réaction (30), et dans lequel le résidu est éventuellement utilisé au moins partiellement comme matériau anti-colmatage.

5. Procédé selon l'une quelconque des revendications précédentes, dans lequel le procédé comprend en outre un préchauffage et éventuellement un séchage de la matière première avec la chaleur restante provenant de l'étape de combustion, et/ou dans lequel le procédé comprend en outre, avant la deuxième étape d'évacuation, une étape de refroidissement consistant à refroidir le résidu.

6. Procédé selon l'une quelconque des revendications précédentes, dans lequel le gaz brûlé est soumis à un traitement de gaz, tel qu'une désulfuration, une épuration, une séparation de gaz ou une incinération, ou une combinaison correspondante.

7. Procédé selon l'une quelconque des revendications précédentes, dans lequel la pression de gaz dans un ou plusieurs canaux de combustion (3) est égale ou inférieure à la pression de gaz dans la zone de réaction (30), et/ou dans lequel la pression de gaz dans la zone de réaction (30) est dans la plage de 0,7 à 2 bars, de préférence inférieure à la pression atmosphérique.

8. Procédé selon l'une quelconque des revendications précédentes, dans lequel la pression du gaz au niveau de la position d'alimentation en amont de la zone de réaction (30) est égale ou supérieure à la pression du gaz au niveau de la première position d'évacuation.

9. Système de réacteur pour la carbonisation et/ou la pyrolyse d'un matériau comprenant un hydrocarbure, en particulier pour le procédé selon l'une quelconque des revendications précédentes, comprenant
un boîtier (32), comprenant
des parois conductrices de chaleur (2) délimitant une zone de réaction (30), dans lequel la zone de réaction (30) est configurée pour permettre le déplacement de la matière première, et dans lequel la zone de réaction est configurée pour permettre la carbonisation et/ou la pyrolyse de la matière première afin d'obtenir un gaz et un résidu
une entrée (34) pour l'alimentation de la matière première vers la zone de réaction (30) au niveau d'une position d'alimentation en amont,
une sortie de gaz (36) pour évacuer le gaz obtenu de la zone de réaction (30), dans lequel la sortie de gaz (36) est positionnée au niveau d'une première position d'évacuation en aval de la zone de réaction (30),
un canal de combustion (3) qui est en relation de conduction thermique avec les parois conductrices de chaleur (2) de la chambre de réaction, dans lequel le canal de combustion comprend des points d'entrée de gaz (5) configurés pour recevoir un gaz comprenant de l'oxygène,
un canal de liaison (4) reliant la sortie de gaz et le canal de combustion (3), et
une sortie de solide (38) pour évacuer le résidu au niveau d'une position d'évacuation en aval de la sortie de gaz.

10. Système de réacteur selon la revendication 9, dans lequel au moins les parois conductrices de chaleur (2) et les canaux de combustion (3) sont composés de matériaux réfractaires.

11. Système de réacteur selon la revendication 9 ou 10, dans lequel la zone de réaction (30) est disposée verticalement, et comprend éventuellement deux ou plusieurs zones de réaction (30) parallèles l'une par rapport à l'autre.

12. Système de réacteur selon l'une quelconque des revendications précédentes 9 à 11, dans lequel la zone de réaction (30) comprend plus d'une sortie de gaz (36) pour évacuer le gaz obtenu et plus d'un canal de combustion (3) pour brûler le gaz obtenu avec le gaz comprenant de l'oxygène.

13. Système de réacteur selon l'une quelconque des revendications précédentes 9 à 12, dans lequel l'entrée (34) de la zone de réaction (30) est fermée par un piston (17), dans lequel le piston (17) est configuré pour se soulever de manière intermittente pour laisser pénétrer un nouveau matériau comprenant un hydrocarbure dans la zone de réaction (30) et pour pousser le matériau en aval de la zone de réaction (30).

14. Système de réacteur selon l'une quelconque des revendications précédentes 9 à 13, comprenant en outre un système de refroidissement (20), tel qu'une chemise de refroidissement (20), agencé au niveau d'une position en aval de la sortie de gaz (36), dans lequel le système de refroidissement (20) est configuré pour refroidir le résidu, et/ou comprenant une boîte de préchauffage et sèche (11) agencée près de l'entrée (34) de la zone de réaction (30), dans lequel la boîte de préchauffage et de séchage (11) est configurée pour préchauffer et éventuellement sécher la matière première par contact avec le gaz brûlé.

15. Système de réacteur selon l'une quelconque des revendications précédentes 9 à 14, comprenant en outre un mécanisme de rupture (21), tel que des tambours ou essieux dentés, disposés au niveau de la sortie de solide (38).
